# EUROPÄISCHE PATENTSCHRIFT

(11) **EP 0 693 423 B1**
(45) Veröffentlichungstag und Bekanntmachung des Hinweises auf die Patenterteilung: **26.08.1998**
(21) Anmeldenummer: 95107853.4
(22) Anmeldetag: 23.05.1995
(51) Int. Cl.: B64D 13/08

(54) **Verfahren zum Klimatisieren von zwei Passagierdecks eines Flugzeuges, insbesondere eines Grossraumflugzeuges, und Einrichtung zur Durchführung des Verfahrens**
Conditionning method for a two-deck passengers aircraft, in particular wide body aircraft, and device for performing the method
Procédé de climatisation d'un avion de passagers à deux ponts, en particulier un avion de grande capacité, et dispositif de mise en oeuvre du procédé

(30) Priorität: 21.07.1994 DE 4425871
(43) Veröffentlichungstag der Anmeldung: 24.01.1996
(73) Patentinhaber: Daimler-Benz Aerospace Airbus Gesellschaft mit beschränkter Haftung, 21129 Hamburg (DE)
(72) Erfinder: Fischer, Heinz, Ing. grad., D-24558 Henstedt-Ulzburg (DE); Markwart, Michael, Dipl.-Ing., D-25469 Halstenbek (DE); Scherer, Thomas, Dr.-Ing., D-22587 Hamburg (DE); Petry, Klaus, Dipl.-Ing., D-21073 Hamburg (DE)
(74) Vertreter: Hansmann, Dierk, Dipl.-Ing.

(56) Entgegenhaltungen:
- FR-A- 2 485 473
- FR-A- 2 642 724

## Beschreibung

Die Erfindung betrifft ein Verfahren zum Klimatisieren von zwei Passagierdecks eines Flugzeuges, insbesondere eines Großraumflugzeuges, und eine Einrichtung zur Durchführung des Verfahrens.

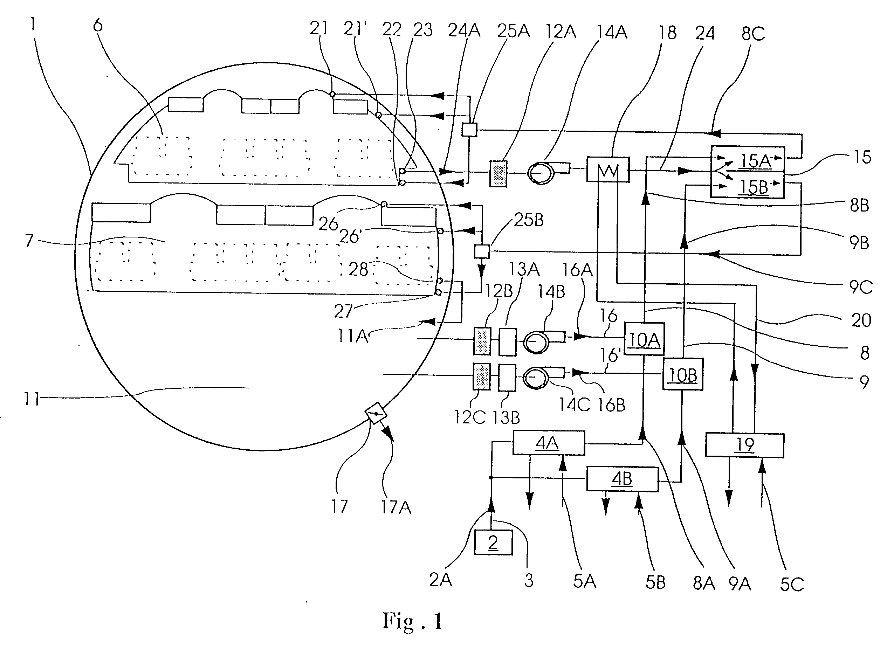

Aus FR 2 642 724 ist ein Klimasystem für ein Flugzeug mit einem Passagierdeck bekannt, bei dem ein Teil der Kabinenabluft aus dem Unterflurbereich mit einem Gebläse in eine Mischeinheit eingespeist, dort mit Frischluft aus den Klimapacks gemischt und dann in die Klimaluftverteilung eingespeist wird. Die Kabinenluftverteilung funktioniert in der in Fig. 1 der besagten Schrift gezeigten Weise, daß Luft aus dem Deckenbereich der Passagierkabine mit mehreren Gebläsen in die Luftverteilung eingespeist wird.

Im Gegensatz zu bisher im Einsatz befindlichen Flugzeugen werden zukünftige Großraumflugzeuge zwei sich über die gesamte Flugzeuglänge erstreckende Passagierdecks aufweisen, die über Treppen miteinander in Verbindung stehen. Bei einem solchen Flugzeug würde das in FR 2 642 724 beschriebene System zu einem aufwendigen Rohrleitungssystem führen, bei dem die Zuluft- und auch die Abluftmenge für das Oberdeck in Leitungen durch das Hauptdeck geführt werden müssen. Darüber hinaus können Rezirkulationsgebläse im Deckenbereich des Hauptdecks gemäß FR 2 642 724, Fig. 1 zwar den Hauptteil der Luft aus dem Deckenbereich absaugen, nicht aber die Luft aus einem Oberdeck. Damit würden überschüssige Luftmengen aus dem Oberdeck durch die Treppenbereiche ins Hauptdeck strömen und Zugerscheinungen verursachen.

Das bekannt gewordene Flugzeugklimasystem ermöglicht außerdem keine getrennte Konditionierung der Luft für zwei Passagierdecks, da sämtliche Frischluftquellen die Luft in eine Unterflurmischeinheit einspeisen. Unterschiedliche Wärmelasten in den beiden Passagierdecks müßten durch zusätzliche Heißluftmengen für das Deck mit der geringeren Wärmelast kompensiert werden, was zu einem erheblichen, unnötigen Energieverbrauch führt.

Demgemäß liegt der Erfindung die Aufgabe zugrunde, ein gattungsgemäßes Verfahren zum Klimatisieren und eine Einrichtung zur Durchführung dieses Verfahrens so auszubilden, daß für Flugzeuge mit zwei Passagierdecks eine energie- und platzsparende Lösung realisiert wird, die den Anforderungen an Temperatur, Luftqualität und benötigte Luftmenge der jeweiligen Passagierkabine gerecht wird.

Diese Aufgabe wird bei einem gattungsgemäßen Verfahren dadurch gelöst, daß Zapfluft in mindestens zwei Zapfluftströme geteilt wird, wobei ein Zapfluftstrom für die Oberdeckpassagierkabine und ein weiterer Zapfluftstrom für die Hauptdeckpassagierkabine vorgesehen ist, daß jeder Zapfluftstrom in mindestens einem Klimaaggregat abgekühlt, in eine Vormischkammer geleitet, mit Rezirkulationsluft gemischt, zu mindestens einer lokalen Mischkammer geleitet, mit ungefähr der gesamten, als Rezirkulationsluft verwendeten Kabinenabluft aus der Oberdeckpassagierkabine vermischt und in die Oberdeck- oder Hauptdeckpassagierkabine geleitet werden und daß der Kabinenabluftstrom aus der Hauptdeckpassagierkabine zum Teil als Rezirkulationsluft den Vormischkammern wieder zugeführt und zum anderen Teil nach außen geleitet werden.

Eine Einrichtung zur Durchführung des erfindungsgemäßen Verfahrens ist mit den Maßnahmen gemäß Anspruch 5 erreicht.

Dabei ist insbesondere von Vorteil, daß für Flugzeuge mit zwei Passagierdecks ein energie- und platzsparende Lösung realisiert ist. Abluftleitungen für die Oberdeckpassagierkabine können vermieden werden, was den Installationsaufwand und Raumbedarf erheblich senkt.
Durch die Rezirkulation der gesamten, dem Oberdeck zugeführten Luftmenge werden Längsströmungen und Zugerscheinungen im Treppenbereich vermieden, was insbesondere für die Passagiere in den Sitzbereichen neben den Treppen einen hohen Komfort ermöglicht.

Durch die getrennte Führung der Zapfluftströme für Haupt- und Oberdeckpassagierkabine ist eine optimale Anpassung der Kühlleistung an die unterschiedlichen Temperaturanforderungen im Ober- und Hauptdeck möglich.

Weiterbildungen und zweckmäßige Ausgestaltungen ergeben sich aus den Unteransprüchen 2 bis 4 und 6 bis 10.

Gemäß den Maßnahmen des Anspruchs 2 bzw. 9 kann Kabinenabluft so wieder aufbereitet werden, daß sie als Rezirkulationsluft dem Luftkreislauf wieder zugeführt werden kann und so die Zapfluftmenge reduziert ist, die den Triebwerken entnommen werden muß.

Die Maßnahmen gemäß Anspruch 3 bzw. 10 ermöglichen, daß die zu den lokalen Mischkammern geführte Klimaluft nicht so tief abgekühlt werden muß. Damit sind die Klimaaggregate entlastet und es wird gleizeitig vermieden, daß Verteilleitungen vereisen.

Um den unterschiedlichen Wärmelasten in den beiden Passagierdecks gerecht zu werden und einen unnötigen Energieverbrauch zu verhindern, kann nach der Maßnahme gemäß des Anspruchs 4 gehandelt werden.

Weiterhin ist vorteilhaft, daß durch die räumlich getrennte Anordnung der Zapfluftleitungen und Vormischkammern und der Maßnahme gemäß Anspruch 6 die Zuverlässigkeit der Luftversorgung bei einem Ausfall von Bauteilen wesentlich erhöht ist.

Die Maßnahmen gemäß Anspruch 7 und 8 ermöglichen, daß anforderungsgerecht im Deckenbereich und im Fußbodenbereich ein Luftstrom in die jeweilige Passagierkabine geleitet werden kann. Im Fußbodenbereich handelt es sich um eine Zusatzheizung, die bei Bedarf zur Steigerung des Wohlbefindens der Passagiere dient.

Die Erfindung wird nachstehend beschrieben, wobei das Verfahren anhand des in der Zeichnung dargestellten Ausführungsbeispieles der Einrichtung zur Durchführung des Verfahrens näher erläutert ist.

Die Fig. 1 zeigt eine Übersichtsdarstellung einer Anordnung zum Klimatisieren, genannt Klimasystem, in einem Flugzeug 1. Das Klimasystem dieses Flugzeuges muß gewährleisten, daß in den Passagierkabinen der korrekte Druck, die gewünschte Temperatur und die erforderliche Qualität der Luft gewährleistet ist. Das Flugzeug 1 ist als Flugzeug mit zwei übereinander angeordneten Passagierdecks 6 und 7 ausgebildet, wobei eine Passagierkabine im Oberdeck 6 und eine Passagierkabine im Hauptdeck 7 angeordnet ist. Im Oberdeck 6 und im Hauptdeck 7 sind aufgrund unterschiedlicher Wärmelasten verschiedene Einblastemperaturen in die Kabine erforderlich, was mit getrennten Klimaluftströmen realisiert wird. Dabei ist zu bemerken, daß jedes Deck in mehrere Temperaturzonen mit getrennter Temperaturregelung aufgeteilt ist und somit neben den in Fig. 1 dargestellten Kreisläufen in Längsrichtung des Flugzeuges weitere Luftkreiskäufe mit einem entsprechenden Luftverteilsystem je Deck vorgesehen sind, die jeweils einen Bereich der Passagierkabine 6 bzw. 7 klimatisieren.

Das Klimasystem wird mit Druckluft 2A aus den Triebwerkskompressoren 2, Hilfstriebwerkskompressoren - dort jeweils Zapfluft genannt -, oder einer anderen Kompressoreinrichtung versorgt. Um mit einem Minimum an Druckluft 2A auszukommen, wird der Druckluftmenge Kabinenabluft 24A aus dem Oberdeckkreislauf und Kabinenabluft 11A aus dem Hauptdeckkreislauf, die als Rezirkulationsluft 16A, 16B verwendet wird, beigemischt. Damit wird nur eine geringe Leistung der jeweiligen Druckluftquelle 2 beansprucht und so beispielsweise den Triebwerken 2 weniger Leistung entzogen, was natürlich einen geringeren Treibstoffverbrauch bedeutet.
Erfindungsgemäß ist ein Klimasystem für ein Mehrdeckflugzeug 1, insbesondere ein Flugzeug mit einer Passagierkabine im Oberdeck 6 und einer Passagierkabine im Hauptdeck 7, wie folgt aufgebaut.
Von einer Druckluftquelle 2, insbesondere von den Haupttriebwerken, wird Zapfluft über eine Druckluftleitung 3 zu einem Klimaaggregat 4A für einen Oberdeckkreislauf der Klimaluft und zu einem Klimaaggregat 4B für einen Hauptdeckkreislauf der Klimaluft geführt. Im jeweiligen Klimaaggregat 4A bzw. 4B wird die den Triebwerken entnommene Zapfluft 2A gekühlt. Die Klimaaggregate 4A und 4B sind außerdem jeweils an eine Außenluftleitung 5A und 5B angeschlossen, um während des Betriebes mit Außenluft die heiße Zapfluft zu kühlen.

Das jeweilige Klimaaggregat 4A bzw. 4B ist mittels einer Luftverteilleitung 8 für einen Klimaluftstrom 8A mit einer Vormischkammer 10A oder mittels einer Luftverteilleitung 9 für einen Klimaluftstrom 9A mit einer Vormischkammer 10B verbunden. Diese Klimaaggregate 4A und 4B mit einer Luftaufbereitung in den Vormischkammern 10A und 10B sind aus Platzgründen im Unterflurbereich, vorzugsweise je ein Aggregat vor und ein Aggregat hinter dem Flügel angeordent. Durch die räumlich getrennte Anordnung der Aggregate 4A und 4B sowie der Zapfluftleitungen 3, 8, 9 und Vormischkammern 10A und 10B ist die Zuverlässigkeit der Luftversorgung bei einem Ausfall von Bauteilen in einem Luftkreis wesentlich erhöht.
Von den Vormischkammern 10A, 10B führen die Luftverteilleitungen 8 und 9 für die Klimaluftströme 8B und 9B zu lokalen Mischkammern 15A, 15B. Die Bezugszeichen 8 und 9 für die Luftverteilleitungen der jeweiligen Klimaluftströme sind in der Zeichnung nur einmal angegeben, gelten aber für das jeweilige gesamte Luftverteilsystem von dem Klimaggregat 4A bzw. 4B bis zum Eingang in die jeweilige Passagierkabine 6 bzw. 7.
Eine Kabinenabluftleitung 24, in der Abluft 24A aus der oberen Passagierkabine 6 strömt, ist über an sich bekannte Rezirkulationsmittel mit den lokalen Mischkammern 15A und 15B verbunden. Die Kabinenabluft 24A wird mittels Feinstfilter 12A gereinigt und aufbereitet, um als Rezirkulationsluft 24A der Klimaluft 8B bzw. 9B beizumischen und so die benötigte Druckluftmenge zu reduzieren. Die lokalen Mischkammern 15A und 15B sind in der dargestellten Ausführungsform zu einer lokalen Mischeinheit 15 zusammengefaßt, die aus zwei in Verbindung stehende lokale Kammern A, B für die getrennten Klimaluftströme 8B und 9B besteht und in der der Kabinenabluftstrom 24A je nach Bedarf den zwei Klimaluftströmen 8B und 9B zugeteilt wird. Die lokale Mischeinheit 15 ist vorzugsweise im Bereich zwischen Hauptdeckpassagierkabine 7 und Oberdeckpassagierkabine 6 angeordnet. Durch diese Anordnung reduziert sich die Anzahl der notwendigen Luftverteilleitungen erheblich. In Flugzeuglängsrichtung sind mehrere solcher lokalen Mischeinheiten 15 angeordnet, um mehrere Temperaturzonen mit getrennter Temperaturregelung zu ermöglichen und eine ausreichende Luftmenge zur Verfügung zu stellen.
Mit der Kopplung beider Luftströme in der Mischeinheit 15 können bei Ausfall einer Luftversorgung bzw. eines Klimaggregates trotzdem beide Passagierdecks 6, 7 mit Klimaluft "notversorgt" werden.

Innerhalb der Kabinenabluftleitung 24 sind bedarfsweise Rezirkulationsmittel angeordnet. Als Rezirkulationsmittel wird ein Filter 12A zur Abscheidung von Partikeln, Gerüchen und Keimen verwendet. Bedarfsweise und wie in dieser Ausführungsform im Hauptdeckkreislauf dargestellt, kann zusätzlich mindestens ein CO₂-Abscheider zum Entfernen von Kohlendioxid in der Kabinenabluftleitung 24 angeordnet sein. Mit einem Rezirkulationsgebläse 14A wird aus der Oberdeckpassagierkabine 6 eine weitestgehend vollständige Absaugung der Klimaabluft erzwungen, um Längsströmungen innerhalb der Kabine und Zugerscheinungen im Bereich der Treppen zwischen Ober- und Hauptdeck zu vermeiden.

Um die Rezirkulationsluft 24A bei Bedarf zu kühlen, ist in der Kabinenabluftleitung 24 ein Rezirkulationswärmetauscher 18 angeordnet, wobei der Rezirkulationswärmetauscher 18 über Kühlleitungen 20 mit einem Kühlaggregat 19, vorzugsweise ein Vapor Cycle Pack, verbunden ist.
Das Kühlmedium, beispielsweise ein Glykol-Kälteträger, in den Kühlleitungen 20 wird am Kühlaggregat 19 abgekühlt und fließt über die Kühlleitungen 20 zum Rezirkulationswärmetauscher 18.
Eine Kühlung des Kühlmediums kann auch durch einen Kaltluftstrom von den Klimaaggregaten 4A bzw. 4B erfolgen.

Eine Alternative zur Außenluftkühlung ist die mögliche Ausbildung des Rezirkulationswärmetauschers als Verdampfer, der über Kühlleitungen 20 mit einem Kompressor verbunden ist und als Kompressionskältemaschine arbeitet.

Die lokalen Mischkammern 15A und 15B sind über Regelventile 25A und 25B mit Lufteinlässen 21, 21', 22 in der Oberdeckpassagierkabine und Lufteinlässen 26, 26', 27 in der Hauptdeckpassagierkabine 7 verbunden. Die getrennten Klimaluftströme 8B und 9B werden in den Mischkammern 15A und 15B mit der Kabinenabluft 24A aus der Oberdeckkabine 6 vermischt und danach als "fertiger" Klimaluftstrom 8C bzw. 9C der jeweiligen Passagierkabine zugeführt. Die Regelventile 25A bzw. 25B teilen den Klimaluftstrom 8C bzw. 9C und es wird der größte Teil des Luftstroms zu den Lufteinlässen 21, 21' bzw. 26, 26' im Deckenbereich und ein kleiner Teil zu den Lufteinlässen 22 bzw. 27 im Fußbodenbereich geleitet. Im Fußbodenbereich handelt es sich um eine Zusatzheizung, die bei Bedarf zur Steigerung des Wohlbefindens der Passagiere dient. Die Aufteilung der Luftströme wird jeweils über die Ventile anforderungsgerecht geregelt.

Über Luftauslässe 23 bzw. 28, die vorzugsweise im Fußbodenbereich der jeweiligen Passagierkabine 6 bzw. 7 vorgesehen sind, tritt Kabinenabluft 11A bzw. 24A aus. Im Oberdeckkreislauf wird vorzugsweise vollständig der gesamte Abluftstrom 24A als Rezirkulationsluft verwendet, die mit entsprechenden Rezirkulationsmitteln aufbereitet und der lokalen Mischeinheit 15 mit den lokalen Kammern 15A und 15B zugeführt wird. Im Hauptdeckkreislauf strömt die Kabinenabluft 11A in einen dafür vorgesehenen Unterflurbereich 11. Daraus wird einerseits Rezirkulationsluft 16A, 16B entnommen oder andererseits über ein Druckregelventil 17 Kabinenabluft 17A abgeführt. Der Teil der Kabinenabluft 11A, der als Rezirkulationsluft 16A, 16B verwendet wird, wird über ein Gebläse 14B, 14C gefördert, mittels Partikel- und Schadstofffilter 12B, 12C gereinigt und bedarfsweise zusätzlich mittels CO₂-Abscheider 13A, 13B aufbereitet und über Rezirkulationsluftleitungen 16, 16' in die entsprechenden Vormischkammern 10A und 10B geleitet und zur Erhöhung der Luftmenge den Klimaluftströmen 8A und 9A beigemischt. Die Vormischkammern 10A und 10B sind ebenfalls im Unterflurbereich 11 des Flugzeuges vorgesehen. Die restliche Kabinenabluft 17A wird über ein Druckregelventil 17 nach außen geleitet. So kann der Kabinendruck durch Regelung der austretenden Abluftmenge durch das Druckregelventil 17 eingestellt werden.

### Bezugszeichenliste

- 1: - Flugzeug
- 2: - Druckluftquelle, insbesondere Triebwerk
- 2A: - Druckluft, insbesondere Zapfluft
- 3: - Druckluftleitung
- 4A: - Klimaaggregat für den Oberdeckkreislauf
- 4B: - Klimaaggregat für den Hauptdeckkreislauf
- 5A - 5C: - Zuführleitungen für Außenluft
- 6: - Passagierkabine im Oberdeck
- 7: - Passagierkabine im Hauptdeck
- 8: - Luftverteilleitung für das Oberdeck
- 8A,8B,8C: - Klimaluftstrom für das Oberdeck
- 9: - Luftverteilleitung für das Hauptdeck
- 9A,9B,9C: - Klimaluftstrom für das Hauptdeck
- 10A, 10B: - Vormischkammern
- 11: - Unterflurbereich
- 11A: - Kabinenabluft aus dem Hauptdeck
- 12A, 12B, 12C: - Geruchsfilter/Partikelfilter
- 13A, 13B: - CO₂-Abscheider
- 14A, 14B, 14C: - Rezirkulationsgebläse
- 15: - lokale Mischeinheit
- 15A, 15B: - lokale Mischkammern
- 16, 16': - Rezirkulationsluftleitungen
- 16A, 16B: - Rezirkulationsluft
- 17: - Kabinendruckregelventil
- 17A: - nach außen abgeleitete Kabinenabluft
- 18: - Rezirkulationswärmetauscher
- 19: - Kühlaggregat
- 20: - Kühlleitung
- 21, 21': - Kabinenlufteinlaß im Oberdeck
- 22: - Kabinenlufteinlaß im Oberdeck
- 23: - Kabinenluftauslaß im Oberdeck
- 24: - Kabinenabluft- (Rezirkulationsluft)leitung aus dem Oberdeck
- 24A: - Kabinenabluft (Rezirkulationsluft) aus dem Oberdeck
- 25A, 25B: - Regelventil
- 26, 26': - Kabinenlufteinlaß im Hauptdeck
- 27: - Kabinenlufteinlaß im Hauptdeck
- 28: - Kabinenluftauslaß im Hauptdeck

## Patentansprüche

1. Verfahren zum Klimatisieren von zwei Passagierdecks eines Flugzeuges, insbesondere eines Großraumflugzeuges, **dadurch gekennzeichnet, daß** Zapfluft (2A) in mindestens zwei Zapfluftströme geteilt wird, wobei ein Zapfluftstrom (8A) für die Oberdeckpassagierkabine (6) und ein weiterer Zapfluftstrom (9A) für die Hauptdeckpassagierkabine (7) vorgesehen ist, daß jeder Zapfluftstrom in mindestens einem Klimaaggregat (4A, 4B) abgekühlt, in eine Vormischkammer (10A, 10B) geleitet, mit Rezirkulationsluft (16A, 16B) gemischt, zu mindestens einer lokalen Mischkammer (15A, 15B) geleitet, mit ungefähr der gesamten, als Rezirkulationsluft verwendeten Kabinenabluft (24A) aus der Oberdeckpassagierkabine (6) vermischt und in die Oberdeck- oder Hauptdeckpassagierkabine (6, 7) geleitet werden und daß der Klimaabluftstrom (11A) aus der Hauptdeckpassagierkabine (7) zum Teil dem Kreislauf als Rezirkulationsluft (16A, 16B) den Vormischkammern (10A, 10B) wieder zugeführt und zum anderen Teil (17A) nach außen geleitet werden.

2. Verfahren nach Anspruch 1,
**dadurch gekennzeichnet, daß**
die als Rezirkulationsluft vorgesehene Kabinenabluft (24A) mittels Rezirkulationsgebläse (14A) abgesaugt und mittels Rezirkulationsmittel (12A) aufbereitet wird.

3. Verfahren nach einem der Ansprüche 1 oder 2,
**dadurch gekennzeichnet, daß**
die als Rezirkulationsluft vorgesehene Kabinenabluft (24A) vor Eintritt in die lokalen Mischkammern (15A, 15B) abgekühlt wird.

4. Verfahren nach einem der Ansprüche 1 bis 3,
**dadurch gekennzeichnet, daß**
der jeweilige Zapfluftstrom (2A) für Ober- und Hauptdeck (6, 7) seperat temperiert wird.

5. Einrichtung zur Durchführung des Verfahrens nach Anspruch 1
**dadurch gekennzeichnet, daß** eine Druckluftquelle (2), insbesondere mindestens ein Triebwerk, über Druckluftleitungen (3) mit mindestens zwei Klimaaggregaten (4A, 4B) verbunden ist, daß zumindest eine Luftverteilleitung (8, 9) das jeweilige Klimaaggregat (4A, 4B) mit je einer Vormischkammer (10A, 10B), die vorzugsweise im Unterflurbereich (11) vorgesehen sind, und weiter stromabwärts mit lokalen Mischkammern (15A, 15B) verbindet, wobei die lokalen Mischkammern (15A, 15B) annähernd in einem Bereich zwischen einer Oberdeckpassagierkabine (6) und einer Hauptdeckpassagierkabine (7) angeordnet sind, zumindest eine als Rezirkulationsleitung verwendeten Kabinenabluftleitung (24) aus der Oberdeckpassagierkabine (6) mit den lokalen Mischkammern (15A, 15B) verbunden ist und zumindest eine Rezirkulationsleitung (16, 16') aus der Hauptdeckpassagierkabine (7) mit den Vormischkammern (10A, 10B) verbunden ist, daß die lokalen Mischkammern (15A, 15B) über ein Luftverteilsystem mit der jeweiligen Passagierkabine (6, 7) verbunden sind, daß mehrere Luftauslässe (23) in der Oberdeckpassagierkabine (6) an die Kabinenabluftleitung (24) angeschlossen sind und mehrere Luftauslässe (28) in der Hauptdeckpassagierkabine (7) mit dem Unterflurbereich (11) in Verbindung stehen, aus dem einerseits die Rezirkulationsluftleitungen (16, 16') zu den Vormischkammern (10A, 10B) führen und andererseits eine Verbindung (17) mit der Flugzeugumgebung besteht.

6. Einrichtung nach Anspruch 5,
**dadurch gekennzeichnet, daß**
die jeweiligen lokalen Mischkammern (15A, 15B) zu einer lokalen Mischeinheit (15) zusammengefaßt sind, wobei eine Luftverbindung zwischen den Kammern vorgesehen ist.

7. Einrichtung zum Klimatisieren nach Anspruch 6,
**dadurch gekennzeichnet, daß**
das Luftverteilsystem aus Luftverteilleitungen (8, 9) mit Lufteinlässen (21, 21', 22, 26, 26', 27) besteht.

8. Einrichtung nach Anspruch 7,
**dadurch gekennzeichnet, daß**
die Lufteinlässe (21, 21', 22, 26, 26', 27) in der jeweiligen Passagierkabine (6, 7) im Deckenbereich und im Fußbodenbereich angeordnet sind, wobei über ein jeweiliges Regelventil (25A, 25B) das Lufteinlassen in den jeweiligen Bereich in Abhängigkeit von Temperatur und vorhandenen Wärmelasten regelbar ist.

9. Einrichtung nach einem der Ansprüche 5 bis 8,
**dadurch gekennzeichnet, daß**
am Eingang der Rezirkulationsleitungen (24, 16, 16') Rezirkulationsmittel (12A-C, 13A-C) und Rezirkulationsgebläse (14A-C) angeordnet sind.

10. Einrichtung nach Anspruch 9,
**dadurch gekennzeichnet, daß**
innerhalb der Kabinenabluftleitung (24) ein Rezirkulationswärmetauscher (18) angeordnet ist, wobei der Rezirkulationswärmetauscher (18) über Kühlleitungen (20) mit einem Kühlaggregat (19) verbunden ist.

## Claims

1. A method of air-conditioning two passenger decks of an aircraft, especially a large-capacity aircraft, characterised in that tapped air (2A) is divided into at least two tapped air streams, wherein one tapped air stream (8A) is provided for the upper deck passenger cabin (6) and another tapped air stream (9A) is provided for the main deck passenger cabin (7), in that each tapped air stream is cooled in at least one air-conditioning unit (4A, 4B), conveyed into a premixing chamber (10A, 10B), mixed with recirculated air (16A, 16B), conveyed to at least one local mixing chamber (15A, 15B), mixed with approximately all the outgoing cabin air (24A), used as recirculated air, from the upper deck passenger cabin (6) and conveyed into the upper deck or main deck passenger cabin (6, 7), and in that part of the outgoing air-conditioning air stream (11A) from the main deck passenger cabin (7) is returned to the circuit as recirculated air (16A, 16B) for the premixing chambers (10A, 10B) and the other part (17A) is conveyed outside.

2. A method according to claim 1, characterised in that the outgoing cabin air (24A) provided as recirculated air is sucked off by means of a recirculating fan (14A) and reconditioned by recirculating means (12A).

3. A method according to either one of claims 1 or 2, characterised in that the outgoing cabin air (24A) provided as recirculated air is cooled before entering the local mixing chambers (15A, 15B).

4. A method according to any one of claims 1 to 3, characterised in that the respective tapped air streams (2A) for the upper and main decks (6, 7) are subject to separate temperature control.

5. An apparatus for carrying out the method according to claim 1, characterised in that a compressed air source (2), in particular at least one engine, is connected with at least two air-conditioning units (4A, 4B) by means of compressed air ducts (3), in that at least one air distribution duct (8, 9) connects the respective air-conditioning unit (4A, 4B) respectively with a premixing chamber (10A, 10B), which chambers (10A, 10B) are preferably provided in the underfloor area (11), and further downstream with local mixing chambers (15A, 15B), wherein the local mixing chambers (15A, 15B) are arranged approximately in an area between an upper deck passenger cabin (6) and a main deck passenger cabin (7), at least one outgoing cabin air duct (24), used as a recirculating duct, from the upper deck passenger cabin (6) is connected with the local mixing chambers (15A, 15B) and at least one recirculating duct (16, 16') from the main deck passenger cabin (7) is connected with the premixing chambers (10A, 10B), in that the local mixing chambers (15A, 15B) are connected with the respective passenger cabins (6, 7) via an air distribution system, in that a plurality of air outlets (23) in the upper deck passenger cabin (6) are connected to the outgoing cabin air duct (24) and a plurality of air outlets (28) in the main deck passenger cabin (7) are connected with the underfloor area (11), from which on the one hand the recirculated air ducts (16, 16') lead to the premixing chambers (10A, 10B) and on the other hand a connection (17) is provided with the atmosphere outside the aircraft.

6. An apparatus according to claim 5, characterised in that the respective local mixing chambers (15A, 15B) are combined into one local mixing unit (15), wherein an air connection is provided between the chambers.

7. An air-conditioning apparatus according to claim 6, characterised in that the air distribution system consists of air distribution ducts (8, 9) with air inlets (21, 21', 22, 26, 26', 27).

8. An apparatus according to claim 7, characterised in that the air inlets (21, 21', 22, 26, 26', 27) are arranged in the respective passenger cabin (6, 7) in the ceiling area and in the floor area, wherein the air inlet into the respective area may be regulated by means of a respective control valve (25A, 25B) as a function of temperature and the existing thermal loads.

9. An apparatus according to any one of claims 5 to 8, characterised in that recirculating means (12A-C, 13A-C) and recirculating fans (14A-C) are arranged at the inlet into the recirculating ducts (24, 16, 16').

10. An apparatus according to claim 9, characterised in that a recirculating heat exchanger (18) is arranged inside the outgoing cabin air duct (24), wherein the recirculating heat exchanger (18) is connected with a cooling unit (19) by means of cooling ducts (20).

## Revendications

1. Procédé de climatisation de deux ponts de passagers d'un avion, en particulier d'un avion de grande capacité, caractérisé en ce que de l'air de distribution (2A) est divisé en au moins deux flux d'air de distribution, un flux d'air de distribution (8A) pour la cabine de passagers du pont supérieur (6) et un autre flux d'air de distribution (9A) pour la cabine de passagers du pont principal (7) étant prévus, en ce que chaque flux d'air de distribution est refroidi dans au moins une unité de conditionnement d'air (4A, 4B), introduit dans une chambre de prémélange (10A, 10B), mélangé à de l'air de recirculation (16A, 16B), acheminé vers au moins une chambre de mélange locale (15A, 15B), mélangé à approximativement tout l'air d'évacuation (24A) provenant de la cabine de passagers du pont supérieur (6) et utilisé comme air de recirculation et introduit dans la cabine de passagers du pont supérieur ou du pont principal (6, 7) et en ce que le flux d'air d'évacuation conditionné (11A) provenant de la cabine de passagers du pont principal (7) est en partie recyclé comme air de recirculation (16A, 16B) et renvoyé vers les chambres de prémélange (10A, 10B) et en partie (17A) évacué vers l'extérieur.

2. Procédé suivant la revendication 1, caractérisé en ce que l'air d'évacuation (24A) de la cabine prévu comme air de recirculation est aspiré au moyen d'un ventilateur de recirculation (14A) et traité par un moyen de recirculation (12A).

3. Procédé suivant la revendication 1 ou 2, caractérisé en ce que l'air d'évacuation de la cabine (24A) prévu comme air de recirculation est refroidi avant son entrée dans les chambres de mélange locales (15A, 15B).

4. Procédé suivant l'une quelconque des revendications 1 à 3, caractérisé en ce que les flux d'air de distribution respectifs (2A) pour le pont supérieur et le pont principal (6, 7) sont tempérés séparément.

5. Dispositif pour l'exécution du procédé suivant la revendication 1, caractérisé en ce qu'une source d'air comprimé (2), en particulier au moins un bloc moteur, est raccordée à au moins deux unités de conditionnement d'air (4A, 4B) par l'intermédiaire de conduites d'air comprimé (3), en ce qu'au moins une conduite d'air comprimé (8, 9) relie l'unité de conditionnement d'air respective (4A, 4B) à une chambre de prémélange respective (10A, 10B) prévue de préférence dans la zone sous plancher (11) et en aval à des chambres de mélange locales (15A, 15B), les chambres de mélange locales (15A, 15B) étant disposées à proximité l'une de l'autre dans une zone séparant une cabine de passagers du pont supérieur (6) et une cabine de passagers du pont principal (7), au moins une conduite d'évacuation d'air (24) hors de la cabine de passagers du pont supérieur (6) utilisée comme conduite de recirculation étant raccordée aux chambres de mélange locales (15A, 15B) et au moins une conduite de recirculation (16, 16') partant de la cabine de passagers du pont principal (7) étant raccordée aux chambres de prémélange (10A, 10B), en ce que les chambres de mélange locales (15A, 15B) sont reliées par un système de distribution d'air à la cabine de passagers respective (6, 7), en ce que plusieurs sorties d'air (23) de la cabine de passagers du pont supérieur (6) sont raccordées à la conduite d'évacuation d'air de la cabine (24) et plusieurs sorties d'air (28) de la cabine de passagers du pont principal (7) sont reliées à la zone sous plancher (11) à partir de laquelle d'une part les conduites de recirculation (16, 16') mènent aux chambres de prémélange (10A, 10B) et d'autre part il s'établit une communication (17) avec le milieu environnant de l'avion.

6. Dispositif suivant la revendication 5, caractérisé en ce que les chambres de mélange locales respectives (15A, 15B) sont réunies en une unité de mélange locale (15), une communication d'air étant prévue entre les chambres.

7. Dispositif de climatisation suivant la revendication 6, caractérisé en ce que le système de distribution d'air est constitué de conduites de distribution d'air (8, 9) équipées de prises d'air (21, 21', 22, 26, 26', 27).

8. Dispositif suivant la revendication 7, caractérisé en ce que les prises d'air (21, 21', 22, 26, 26', 27) sont disposées dans la cabine de passagers respective (6, 7) dans la zone de plafond et dans la zone de plancher, la prise d'air dans la zone respective pouvant être réglée par une vanne de réglage respective (25A, 25B) en fonction de la température et des contraintes de chaleur existantes.

9. Dispositif suivant l'une quelconque des revendications 5 à 8, caractérisé en ce que le moyen de recirculation (12A-C, 13A-C) et le ventilateur de recirculation (14A-C) sont disposés à l'entrée des conduites de recirculation (24, 16, 16').

10. Dispositif suivant la revendication 9, caractérisé en ce qu'un échangeur de chaleur de recirculation (18) est disposé à l'intérieur de la conduite d'air d'évacuation de la cabine (24), l'échangeur de chaleur de recirculation (18) étant raccordé à une unité de refroidissement (19) par l'intermédiaire de conduites de refroidissement (20).
